# EUROPÄISCHE PATENTSCHRIFT

(11) **EP 2 610 189 B1**
(45) Veröffentlichungstag und Bekanntmachung des Hinweises auf die Patenterteilung: **17.06.2015**
(21) Anmeldenummer: 11196201.5
(22) Anmeldetag: 30.12.2011
(51) Int. Cl.: B65C 9/16, B65C 9/40

(54) **Vorrichtung und Verfahren zum Transferieren von Behälter-Ausstattungen**
Method and device for transferring container decorations
Dispositif et procédé destinés au transfert de décorations de récipients

(43) Veröffentlichungstag der Anmeldung: 03.07.2013
(73) Patentinhaber: Krones AG, 93073 Neutraubling (DE)
(72) Erfinder: Scheck, Josef, 93098 Mangolding (DE); Winter, Horst, 93073 Neutraubling (DE); Humele, Heinz, 93107 Thalmassing (DE); Kronseder, Volker, 93073 Neutraubling (DE); Davidson, Hartmut, 93197 Zeitlarn (DE)
(74) Vertreter: Grünecker Patent- und Rechtsanwälte PartG mbB

(56) Entgegenhaltungen:
- DE-A1- 19 845 964
- DE-A1- 19 851 631

## Beschreibung

Die Erfindung betrifft eine Vorrichtung gemäß Oberbegriff des Patentanspruchs 1, und wie aus der DE 198 45 964 A1 bekannt, sowie ein Verfahren gemäß Patentanspruch 20.

Aus US 5 787 598, Fig. 2, ist ein Greiferzylinder einer Transferstation einer Etikettiervorrichtung bekannt, der mit sechs Festhalteeinheiten mit jeweils zwei Greiferfingern bestückt und mit einer Zentralwelle um die Transferachse drehbar ist. Die kontinuierliche Antriebsbewegung des Greiferzylinders ist mit der von Leimpaletten eines Zubringers synchronisiert (Zahnradgetriebe). Da die Festhalteeinheiten regelmäßig und mit festen relativen geometrischen Zuordnungen an dem Greiferzylinder montiert sind, muss der Greiferzylinder bei einem Wechsel der Ausstattung, hier einer Etikettensorte, und/oder bei einem Teilungswechsel der zu etikettierenden Behälter gewechselt werden. Dies ist zeitaufwändig und mühsam, und bedingt die Vorhattungvieterve schiedener Wechselteile in entsprechend großzügig dimensionierten Magazinbereichen, was teuer ist. Außerdem bedingt jeder Wechsel eine unzweckmäßig lange Stillstandszeit.

Aus EP 1 939 096 A ist eine Transferstation einer Etikettiervorrichtung mit einem Greiferzylinder mit beispielsweise zehn in regelmäßigen Umfangsabständen montierten Festhalteeinheiten bekannt. Der Greiferzylinder wird synchron mit Etiketten bereitstellenden Leimpaletten eines Zubringers angetrieben, und auch synchron mit einem Karussell für die zu etikettierenden Behälter, wobei die Teilung zwischen den Festhalteeinheiten sowohl zur Teilung der Leimpaletten als auch der Behälter passt. Bei einer Änderung der Teilung beispielsweise zwischen den zu etikettierenden Behältern ist es erforderlich, den Greiferzylinder durch einen anderen zu ersetzen. Jedoch ist die Transferstation so ausgebildet und ausgestattet, dass sie im Stillstand der Vorrichtung ohne Austausch an ein neues Etikettenformat anpassbar ist, da die Festhalteeinheiten am Greiferzylinder motorisch dann wahlweise am selben Greiferzylinder in unterschiedliche Kooperationspositionen mit den Leimpaletten und den Behältern umstellbar sind. Bei einer solchen Umstellung wird die Festhalteeinheit über einen in den Greiferzylinder integrierten Steiltrieb parallel und/oder radial zur Transferachse des Greiferzylinders in eine neue Kooperationsposition gebracht, ehe der Betrieb wieder aufgenommen werden kann.

Aus DE 14 86 142 A ist als Transferstation einer Etikettiervorrichtung ein kontinuierlich angetriebener Greiferzylinder bekannt, der gleichzeitig Etiketten für den Bauch und den Hals von Flaschen in unterschiedlichen Etagen transferiert. Zumindest die Andrückelemente der Festhalteeinheiten für die Halsetiketten sind in Umlaufbahnrichtung gegen Federkraft relativ zum Greiferzylinder beweglich, so dass es bei einer Berührung mit der Flasche durch Reibschluss zu einer vorübergehenden Beschleunigung des Andruckelementes kommt, damit das auf einem größeren Teilkreisdurchmesser als das Bauchetikett applizierte Halsetikett schonend und präzise auf den Flaschenhals aufgebracht werden kann. Ein Etikettensortenwechsel oder eine andere Teilung zwischen den zu etikettierenden Flaschen bedingen den Wechsel des Greiferzylinders, der synchron von und mit dem mit Leimpaletten bestückten Zubringer angetrieben wird.

DE 25 44 277 A behandelt einen als Transferstation zum gleichzeitigen Transferieren von Bauch- und Halsetiketten für Flaschen ausgebildeten Greiferzylinder, dessen übereinanderliegende Etagen synchron mit dem Leimpaletten aufweisenden Zubringer angetrieben sind und in welchem die Festhalteeinheiten jeweils in festgelegten Relativpositionen montiert sind, die zur Teilung der Leimpaletten und auch zur Teilung der zu etikettierenden Flaschen passen. Die Festhalteeinheiten für die Halsetiketten sind jedoch über im Greiferzylinder verankerte Kurbelarme radial zur Transferachse beweglich, wobei die Kurbelarme mit Tastrollen an stationären Steuerkurven anliegen. Ferner ist jede Festhalteeinheit eines Halsetiketts starr mit einer weiteren Kurbel verbunden, die mit einer Tastrolle an einer weiteren stationären Steuerkurve anliegt, um die Festhalteeinheit zusätzlich auch um ein Schwenklager am ersten Kurbelarm zu verschwenken. Diese zusätzlichen relativen Bewegungen der Festhalteeinheiten der Halsetiketten werden benutzt, um beim gleichzeitigen Applizieren der Bauch- und Halsetiketten auch die Halsetiketten präzise anbringen zu können. Für eine andere Flaschensorte oder eine andere Teilung zwischen den zu etikettierenden Flaschen und gegebenenfalls auch bei einem Etiketten-Sortenwechsel wird der über den Zubringer kontinuierlich angetriebene Greiferzylinder komplett gegen einen dann passenden gewechselt.

Aus der weitestgehend festgelegten geometrischen Relation zwischen den Festhalteeinheiten im Greiferzylinder dieser bekannten Transferstationen resultiert die Notwendigkeit eines Greiferzylinder-Wechsels, sobald die Abgabebedingungen und/oder Abgabeteilungen und/oder Behältergrößen zu ändern sind.

Der Erfindung liegt die Aufgabe zugrunde, eine Vorrichtung sowie ein Verfahren der eingangs genannten Art anzugeben, mit denen die Komplexität bekannter Vorrichtungen für denselben Zweck drastisch reduzierbar ist, die an unterschiedlichen Ausstattungs-Applikationsmaschinen universell nutzbar sind, und die ohne Austausch der Transferstation für unterschiedliche Ausstattungsabmessungen, Behälterdimensionen, Behälterteilungen und Anlagenleistungen und zumindest weitestgehend ohne manuelle Eingriffe einsetzbar sind.

Die gestellte Aufgabe wird mit den Merkmalen des Patentanspruchs 1 und verfahrensgemäß mit den Merkmalen des Patentanspruchs 20 gelöst.

Vorrichtungstechnisch wird die Transferstation nicht mehr als geometrisch starrer rotativer Zylinder gestaltet, sondern durch ein hochflexibles Transfersystem ersetzt, in welchem jeweils zumindest eine Festhalteeinheit individuell mit einem Geschwindigkeitsprofil in Umlaufrichtung antreibbar ist, das einerseits exakt mit dem des Zubringers und andererseits mit dem der Abgabeposition synchron ist, während in dazwischenliegenden Bewegungsbereichen verzögert oder beschleunigt werden kann, was es ermöglicht, bei der Verarbeitung unterschiedliche Abmessungen der Ausstattungen in Umfangsrichtung sowie unterschiedliche Behälterdurchmesser und Behälter oder Behälterförderteilungen problemlos mit einer einzigen Transferstation ohne deren Austausch zu bewältigen. Da die Antriebsmotoren in der Transferstation angeordnet sind, können sie problemlos per Programm gesteuert werden, ohne manuell eingreifen zu müssen und vor allem ohne einen Austausch zu erzwingen, wenn die vorerwähnten Arbeitsparameter geändert werden müssen.

Verfahrenstechnisch ist durch die Möglichkeit, die Festhalteeinheiten bei einer vollen Umdrehung mit periodisch ungleichförmigen Geschwindigkeiten um die Transferachse anzutreiben, über die Ansteuerung der Antriebsmotoren eine problemlose Anpassung an sich ändernde Arbeitspärameter wie die Ausstattungsabmessung zumindest in Umfangsrichtung, den Behälterdurchmesser, die Flaschentischteilung und die Anlagenleistung wie gegebenenfalls auch die Zubringer-Teilung und -Geschwindigkeit durchführbar, ohne Garniturenteile auswechseln zu müssen. Das Verfahren ist mit einem Typ der Transferstation und deren Antriebskonzept komfortabel an unterschiedliche Arbeitsparameter jederzeit anpassbar und ermöglicht selbst im Betrieb eine jederzeitige Nachjustierung, da eine in Umfangsrichtung feste Zuordnung zwischen den Festhalteeinheiten entfällt und diese nicht von einem gemeinsamen Antrieb sondern individuell gesteuert bewegt werden.

Zweckmäßig ist jede volle Umdrehung einer Festhalteeinheit in mehrere aufeinanderfolgende Antriebsmotor-Steuerbereiche jedes Antriebsmotors unterteilt, nämlich in einen zur Umlaufbewegung der Zubringer-Übernahmeposition synchronisierten Übernahmesektor, in einen nachfolgenden ersten Regelsektor mit auf zumindest die zweite Teilung zwischen den Abgabepositionen und/oder die Abmessung der Ausstattung in Umfangsrichtung und/oder den Durchmesser oder die Form des Behälters individuell abgestimmter Beschleunigung oder Verzögerung, in einen nachfolgenden, mit einer Umlauf- oder Vorbeibewegung der Abgabeposition synchronisierten Abgabesektor, und einen abschließenden, zumindest auf die Teilung zwischen den Übernahmepositionen und/oder die Abmessung der Ausstattung in Umfangsrichtung und/oder die Behälterdimension individuell abgestimmten zweiten Regelsektor mit Beschleunigung oder Verzögerung der Festhalteeinheit.

Bei einer zweckmäßigen Ausführungsform sind zwei oder mehr als zwei Festhalteeinheiten der Transferstation vorgesehen, und ist für jede Festhalteeinheit ein eigener Antriebsmotor in der Transferstation untergebracht, vorzugsweise ein elektrischer Antriebsmotor.

Bei einer alternativen Ausführungsform sind in der Transferstation zwei oder mehr als zwei, vorzugsweise eine gerade Anzahl, Festhalteeinheiten vorgesehen, und ist für jeweils mindestens zwei der Festhalteeinheiten, vorzugsweise in Umfangsrichtung aufeinanderfolgender Festhalteeinheiten, ein gemeinsamer Antriebsmotor vorgesehen. Mindestens zwei sich einen gemeinsamen Antriebsmotor teilende Festhalteeinheiten verringern den baulichen Aufwand in der Transferstation erheblich. Bei mindestens vier Festhalteeinheiten in der Transferstation bewegen sich zwar jeweils zwei synchron und in Umlaufrichtung relativ zu den weiteren unterschiedlich, wobei jedoch innerhalb einer vollen Umdrehung jeweils nur eine Festhalteeinheit der zwei gekoppelten eine Übernahme- oder Abgabefunktion erfüllt, die über den Antriebsmotor präzise steuerbar oder regelbar ist, während die jeweils andere der zwei Festhalteeinheiten dann nur eine reine Transferfunktion ausführt, hingegen dann die beiden von einer Übernahme- oder Abgabefunktion freigestellt sind, sobald eine individuelle Beschleunigung oder Verzögerung gesteuert werden soll.

Bei einer zweckmäßigen Ausführungsform ist jeder Antriebsmotor ein elektrischer Servomotor und entweder als Direktantrieb ausgebildet oder über ein Getriebe mit der wenigstens einen Festhalteeinheit verbunden.

Bei einer anderen zweckmäßigen Ausführungsform ist der jeweilige Antriebsmotor in der Transferstation ein elektrischer Torque-Motor mit stationärem, einen Wicklungsteil enthaltendem Stator und einem mit der wenigstens einen Festhalteeinheit gekoppelten, Magneten tragenden Ringläufer, wobei die mehreren Torque-Motoren koaxial zur Transferachse übereinandergestapelt und/oder ineinandergeschachtelt sind.

Unabhängig vom Typ des Antriebsmotors ist jede mit einem Antriebsmotor verbundene Festhalteeinheit oder sind mit einem gemeinsamen Antriebsmotor verbundene Festhalteeinheiten direkt um die Transferachse drehbar gelagert, was Bauraum spart und in baulicher Vereinfachung resultiert, vorzugsweise in einem zentralen Mehrfach-Hohlwellen-Lagerbereich und/oder wenigstens einem großdurchmessrigen Außenlagerbereich.

Zweckmäßig ist jede Festhalteeinheit oder zumindest das Paar Festhalteeinheiten an einem Hebelarm angeordnet, der einen vorbestimmten Radialabstand zur Transferachse überbrückt und an einer mit der Transferachse koaxialen Welle, vorzugsweise einer Hohlwelle, angeordnet ist. Im Inneren der jeweils innersten Hohlwelle oder einer stationären Drehlager-Hohlwelle können Leistungs- oder Signal-Übertragungsleitungen beispielsweise zu den Festhalteeinheiten installiert werden, beispielsweise zur Betätigung der Festhalteeinheiten und/oder um diese zumindest in etwa radial zur Transferachse zusätzlich zu verstellen.

Bei Verwendung von elektrischen Servomotoren als Antriebsmotoren können diese jeweils seitlich versetzt zur Transferachse stationär angeordnet und mit den Hebelarmen bzw. Festhalteeinheiten über Getriebeverbindungen verbunden sein.

In einer zweckmäßigen Ausführungsform umfasst jede Festhalteeinheit als eine Baugruppe eine Ambossleiste, zumindest ein Andruckkissen, und entlang der Ambossleiste wenigstens einen Greiferfinger, der bei der Betätigung der Festhalteeinheit relativ zur Ambossleiste zwischen Greif- und Freigabepositionen verstellbar ist, zweckmäßig mit einem in die Festhalteeinheit integrierten Antrieb.

Bei einer weiteren Ausführungsform kann jede Festhalteeinheit in Richtung der Transferachse übereinanderliegend mindestens zwei Baugruppen zum gleichzeitigen Transferieren unterschiedlicher Ausstattungen umfassen, beispielsweise zum gleichzeitigen Transferieren und Applizieren von Bauch- und Halsetiketten, oder dgl..

Um baulich aufwändige Steuerkurven wegfallen lassen zu können, kann jede Festhalteeinheit zur Greiferfingerbetätigung zusätzlich einen eigenen Betätigungsmotor umfassen, vorzugsweise einen elektrischen Servomotor, einen Betätigungsmagneten, einen Piezoantrieb oder einen Pneumatikzylinder, der, vorzugsweise, direkt oder indirekt am die Festhalteeinheit tragenden Hebelarm angeordnet wird. Die zur Ansteuerung der Betätigungsmotoren erforderliche Signal-/Energieübertragung kann drahtlos erfolgen.

Um eine noch bessere Anpassung an zu ändernde Arbeitsparameter zu ermöglichen, kann jede Festhalteeinheit beispielsweise am Hebelarm einen zusätzlichen Bewegungsfreiheitsgrad, vorzugsweise in in etwa zur Transferachse radialer und linearer Richtung, aufweisen, und einen Hebelarm-Antriebsmotor, vorzugsweise einen elektrischen oder pneumatischen Linearmotor, zur Verstellung der Festhalteeinheit relativ zum Hebelarm in Richtung des zusätzlichen Bewegungsfreiheitsgrades. Auf diese Weise lässt sich auch der Teilkreisdurchmesser der Umlaufbahn jeder Festhalteeinheit innerhalb einer vollen Umdrehung individuell variieren.

Bei einer baulich einfachen Ausführungsform ist der die mindestens zwei Festhalteeinheiten von insgesamt mehr als zwei Festhalteeinheiten in der Transferstation mit dem gemeinsamen Antriebsmotor verbindende Hebelarm als Winkelhebelarm ausgebildet, der an den beiden von der Transferachse nach außen weisenden Armenden jeweils eine Festhalteeinheit trägt und im Bereich der Winkelbeuge an der Transferachse drehgelagert und mit dem Antriebsmotor gekoppelt ist.

Dabei kann es günstig sein, wenn der Winkelhebelarm in etwa mit 90° abgewinkelt ist. Dies ist besonders zweckmäßig bei einer Transferstation mit vier Festhalteeinheiten. Der Winkelbereich kann bei einer höheren Anzahl Festhalteeinheiten anders gewählt werden.

Um gegenseitige Kollisionen zu vermeiden, wenn die Festhalteeinheiten mit unterschiedlichen Bewegungsgeschwindigkeiten umlaufen, kann es zweckmäßig sein, wenn die Hebelarme zumindest in innenliegenden Teilbereichen in Richtung der Transferachse in der Transferstation in unterschiedlichen Ebenen angeordnet sind.

Um einen sauberen und schwingungsarmen Lauf gewährleisten zu können, kann es ferner zweckmäßig sein, wenn für jede Festhalteeinheit oder für mehrere an einem Hebelarm angeordnete Festhalteeinheiten eine beispielsweise gegenüberliegende Unwucht-Ausgleichsmasse vorgesehen ist.

Besonders zweckmäßig ist die Transferstation durch Hinzunahme oder Wegnahme wenigstens einer Festhalteeinheit, vorzugsweise zuzüglich ihres Antriebsmotors oder unter Kopplung oder Entkopplung mit oder von dem permanent installierten Antriebsmotor, modular modifizierbar ausgebildet. Auf diese Weise ist selbst bei gravierenden Änderungen der Arbeitsparameter kein Austausch der gesamten Transferstation erforderlich, sondern nur die Weg- oder Hinzunahme gegebenenfalls untereinander gleichartiger Garniturteile wie der Festhalteeinheiten möglich.

Zweckmäßig sind die Antriebsmotoren an eine elektronische Steuerung angeschlossen, die, vorzugsweise, zur Anpassung der Transferstation zumindest an unterschiedliche Abmessungen der Ausstattungen in Umfangsrichtung und/oder unterschiedliche erste und/oder zweite Teilungen und/oder unterschiedliche Behälterdurchmesser oder Formen programmierbar ist und/oder entsprechende Programme vorhält, unter denen ohne manuelle Manipulationen in der Transferstation wählbar ist.

Bei einer zweckmäßigen Verfahrensausführung wird jede Festhalteeinheit in einem auf eine sich bewegende Übernahmeposition ausgerichteten Übernahmesektor einer vollen Umdrehung seiner Umlaufbahn in Ausrichtung auf die erste Teilung im Zubringer und synchron mit der Übernahmeposition angetrieben, in einem nachfolgenden ersten Regelsektor in individueller Abstimmung zumindest auf die zweite Teilung zwischen den Abgabepositionen und/oder die Abmessung der Ausstattung in Umfangsrichtung und/oder den Behälterdurchmesser beschleunigt oder verzögert, in einem nachfolgenden Abgabesektor in Ausrichtung auf die zweite Teilung zwischen den Behältern und synchron mit der Bewegung der Abgabeposition bzw. Umdrehungsgeschwindigkeit der Behälteroberfläche angetrieben, und in einem abschließenden zweiten Regelsektor zur neuerlichen individuellen Abstimmung wieder auf die erste Teilung und/oder die Geschwindigkeit der Übernahmeposition und/oder die Abmessung der Ausstattung in Umfangsrichtung beschleunigt oder verzögert. Durch diese bei der Steuerung der Antriebsmotoren berücksichtigte Unterteilung in die Sektoren wird nicht nur jede Festhalteeinheit in ihrer Übernahme- oder Abgabesituation korrekt sondern auch unabhängig von jeder anderen, Festhalteeinheit angetrieben und ist in den Regelbereichen die vorbereitende Anpassung der Bewegungsgeschwindigkeit der Festhalteeinheit für die kommende Abgabe- oder Übernahmefunktion wiederum unabhängig von jeder anderen Festhalteeinheit möglich. Sind zumindest zwei von insgesamt mindestens vier Festhalteeinheiten zwangsgekoppelt, lässt sich der Verfahrensablauf dennoch genauso feinfühlig regeln, weil die jeweils zweite Festhalteeinheit des zwangsgekoppelten Paares dann nur eine reine Transferfunktion ohne Kooperation mit irgendwelchen Komponenten außerhalb der Transferstation ausübt, wenn die andere der zwangsgekoppelten Festhalteeinheiten gerade eine Übernahmefunktion oder Abgabefunktion erfüllt, und werden die individuellen Beschleunigungen und Verzögerungen für eine Festhalteeinheit während der Regelsektoren dann gesteuert, wenn keine der zwei gekoppelten Festhalteeinheiten eine Übernahme- oder Abgabefunktion hat.

Ausführungsformen des Erfindungsgegenstandes werden anhand der Zeichnungen erläutert. Es zeigen:
- Fig. 1: eine Schemadraufsicht einer Vorrichtung zum Transferieren und Applizieren von Ausstattungen innerhalb eines Verfahrensablaufes bei der Behälteretikettierung und mit einer zwei Festhalteeinheiten aufweisenden Transferstation,
- Fig. 2: eine Schemadraufsicht auf eine andere Ausführungsform, innerhalb des Verfahrensablaufes, mit einer vier Festhalteeinheiten aufweisenden Transferstation,
- Fig. 3: eine weiter schematisierte Draufsicht zur Verdeutlichung des Verfahrensablaufes,
- Fig. 4: eine perspektivische Halbschnittdarstellung einer konkreten Ausführungsform einer Transferstation, wobei der Übersichtlichkeit halber Teile weggelassen sind,
- Fig. 5: eine Perspektivansicht von Kernbestandteilen einer weiteren Ausführungsform einer Transferstation,
- Fig. 6: einen schematisierten Achsschnitt der Ausführungsform von Fig. 5 in einer Detailvariante,
- Fig. 7: einen weiter schematisierten Achsschnitt der Ausführungsform von Fig. 5 als weitere Detailvariante,
- Fig. 8: eine Perspektivansicht einer weiteren Ausführungsform einer Transferstation,
- Fig. 9: einen Achsschnitt der Ausführungsform von Fig. 8, und
- Fig. 10: einen Achsschnitt einer weiteren Detailvariante, ähnlich der in Fig. 2 schematisiert dargestellten Transferstation.

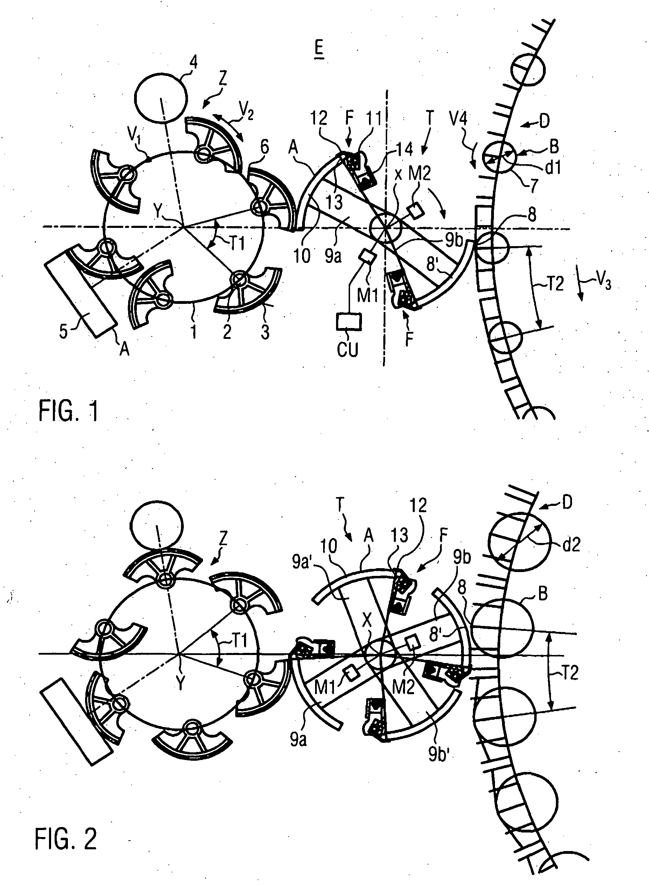

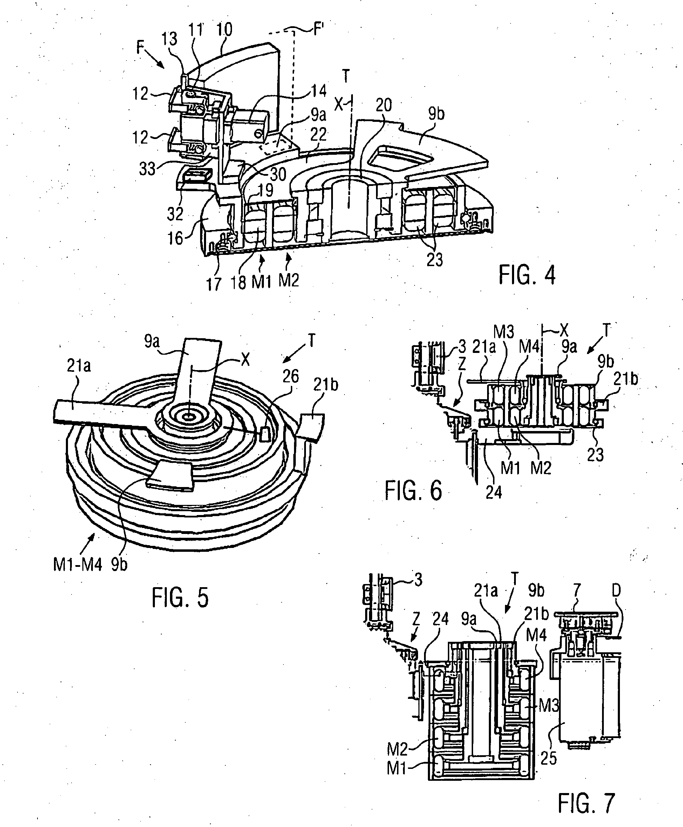

Die in den Fig. 1 bis 10 gezeigten Transferstationen T dienen zum Übernehmen, Transferieren und Abgeben von Ausstattungen, insbesondere bei der Behälteretikettierung, vorzugsweise Flaschenetikettierung, wobei die Ausstattungen Etiketten, Stanniolzuschnitte, flächige oder reliefartige Applikationen oder Logos und dgl. sein können. Die Transferstationen T werden nachfolgend in Verbindung mit einer Kaltleim-Etikettiervorrichtung für Flaschen aus Glas oder Kunststoff erläutert, obwohl dasselbe Prinzip auch verwendbar ist bei Heißklebe- oder Vakuumtechnik oder dgl. und auch für andere Arten von Behältern. Ferner wird die Erfindung anhand einer Transferstation erläutert, in der die Ausstattungen in nur einer Ebene und auf die Behälter appliziert wird, obwohl in der Transferstation unterschiedliche Ausstattungen für unterschiedliche Behälterbereiche auch in übereinanderliegenden Ebenen oder Etagen verarbeitet werden könnten (in Fig. 4 schematisch angedeutet). Die jeweilige Transferstation T ersetzt den in solchen Maschinen üblicherweise zum Transfer von Ausstattungen benutzten Greiferzylinder und ist universell an unterschiedliche Zubringersysteme und/oder Behältertransportsysteme anpassbar, modular mit diesen kombinierbar, und ohne Austausch der Transferstation T modular abwandelbar.

Fig. 1 verdeutlicht in einer Draufsicht Hauptkomponenten einer Etikettiermaschine E zum kontinuierlichen Etikettieren von Behältern B, beispielsweise Kunststoff- oder Glasflaschen, mit als vorgefertigte und zugeschnittene Etiketten ausgebildeten Ausstattungen A. Ein Zubringer Z für die vereinzelten Ausstattungen A weist einen um eine Achse Y drehangetriebenen Rotor 1 auf, an welchem in gleichen Radialabständen von der Achse Y und mit einer regelmäßigen ersten Teilung T1 an Schwenkwellen 2 Leimpaletten 3 schwenkbar angeordnet sind, die durch einen nicht gezeigten Triebstock sowohl zu einer Umlaufbewegung mit einer Geschwindigkeit V1 als auch einer Hin- und Herschwenkbewegung mit einer Geschwindigkeit V2 angetrieben werden. Den Leimpaletten 3 ist zumindest eine Leimwalze 4 zugeordnet, an welcher die gewölbte Oberfläche jeder Leimpalette 3 mit beispielsweise Kaltleim beschichtet wird, ehe sie an einem Ausstattungsmagazin 5 vorbeibewegt wird, aus dem jede Leimpalette 3 (falls in eine Aufnahmeposition geschwenkt, und nicht, wie optional möglich, passiviert gehalten) eine Ausstattung A abnimmt und zu der Transferstation T liefert. Dabei definiert die jeweilige Leimpalette 3 eine Übernahmeposition 6, die sich mit einer bestimmten Geschwindigkeit bewegt, die sich aus den Geschwindigkeiten V1 und V2 ergibt.

Die Transferstation T weist auf einem stationären Unterbau (nicht gezeigt in Fig. 1) erste und zweite Antriebsmotoren M1 und M2 auf und definiert eine zur Achse Y parallele Transferachse X, um welche in der in Fig. 1 gezeigten Ausführungsform zwei Festhalteeinheiten F, individuell angetrieben von den Antriebsmotoren M1, M2, umlaufend bewegbar sind. Die Antriebsmotoren M1, M2 sind zweckmäßig elektrische Motoren, entweder Servomotoren oder Torque-Motoren, die steuerungs- und regelseitig an eine zentrale Steuerung CU angeschlossen sind. Die Steuerung CU ist vorzugsweise eine elektronische und programmierbare oder Programme vorhaltende Steuerung. Jede Festhalteeinheit F ist an einem Hebelarm 9a, 9b montiert, der sich in etwa radial von der Transferachse X nach außen erstreckt und in einem durch einen Vollkreis angedeuteten Lagerbereich zentral drehgelagert ist. Jede Festhalteeinheit F umfasst in der gezeigten Ausführungsform zumindest ein elastisches Andrückkissen 10 mit gegebenenfalls bombierter Oberfläche, eine annähernd parallel zur Transferachse X orientierte Ambossleiste 13 und zumindest einen entlang der Ambossleiste 13 angeordneten Greiferfinger 12, der um eine Schwenkachse 11 durch einen Betätigungsantrieb 14 relativ zur Ambossleiste 13 zwischen Greif- und Freigabepositionen (in Fig. 1 oben Greifposition, unten Freigabeposition) getaktet verstellbar ist, um eine Ausstattung A zu greifen und vom Zubringer Z zu übernehmen, ergriffen zum Behälter B zu transferieren, und darauf zu applizieren und freizugeben.

Die in Fig. 1 obere Festhalteeinheit F ist durch ihren Antriebsmotor M1 durch eine mit der Oberfläche einer Leimpalette 3 synchronisierte Umlaufbewegung im Uhrzeigersinn zunächst so positioniert worden, dass der Greiferfinger 12 an der Übergabeposition 6 ein Ende der Ausstattung A ergriffen und bei der Weiterbewegung von der Leimpalette 3 abgezogen und auf das Andrückkissen 10 aufgelegt hat, wie dies in Fig. 1 oben angedeutet ist. Währenddessen, oder zuvor oder danach hat die zweite Festhalteeinheit F eine zuvor auf gleiche Weise an der Übernahmeposition 6 übernommene Ausstattung A bereits an einer sich mit einer Geschwindigkeit V3 hier eines Drehtisches D bewegenden Übergabeposition 8 an einen Behälter B, der dabei mit einer Geschwindigkeit V4 rotiert, übergeben, wobei die mit der Übergabeposition 8 korrelierte Übergabeposition 8' am Andrückkissen 10 in etwa in dessen in Umfangsrichtung gesehener Mitte lag. Die applizierte Ausstattung A ist in Fig. 1 zwar noch gestreckt angedeutet, wird jedoch durch die Drehbewegung (Geschwindigkeit V4) um den Behälter B gewickelt, unterstützt durch nicht gezeigte Anstreichvorrichtungen. Bei der Abgabe wird die Festhalteeinheit F (die in Fig. 1 untere) exakt synchron mit sich aus der Überlagerung der Geschwindigkeiten V3 und V4 ergebenden Geschwindigkeit vom Antriebsmotor M2 um die Transferachse X bewegt. Bei der Abgabe wurde der Greiferfinger 12 in die Freigabeposition betätigt, so dass die Ausstattung A aufgrund des Leimauftrages vom Behälter 8 mitgenommen wurde und das Andrückkissen 10 verlassen hat. Die betroffene Festhalteeinheit wird dann vom Antriebsmotor M1, M2 wieder zum Zubringer Z bewegt.

Die Behälter B sind einzeln auf Drehtischen 7 des Drehtisches D positioniert und werden von den Drehtischen 7 mit der Umfangsgeschwindigkeit V4 angetrieben. Zwischen den aufeinanderfolgenden Behältern B liegt eine zweite regelmäßige Teilung T2 vor, wobei die Behälter B gleiche Durchmesser d1 aufweisen. Zwischen der Übernahme (in Fig. 1 oben, gerade vor dem Abschluss) und der Abgabe jeweils einer Ausstattung A (in Fig. 1 unten, gerade vollzogen), bei denen die jeweilige Festhalteeinheit F synchron mit der Übernahmeposition 6 bzw. synchron mit der Abgabeposition 8 im Uhrzeigersinn angetrieben wurde, liegen innerhalb einer vollen Umdrehung zwei weitere Regelsektoren vor, in denen die Festhalteeinrichtungen F eine reine Transferfunktion oder Leerlauffunktion ohne Kooperation mit irgendwelchen anderen Komponenten ausführen. In diesen Sektoren werden, ausgenommen einem eher theoretischen Fall, in welchem die ersten und zweiten Teilungen T1 und T2 und die jeweiligen Geschwindigkeiten der Übergabeposition 6 und der Abgabeposition 8 identisch sind, die Festhalteeinheiten F von ihren Antriebsmotoren M1, M2 um die Transferachse X beschleunigt oder verzögert, und zwar in Anpassung an unterschiedliche Arbeitsparameter in der Übernahmesituation bzw. der Abgabesituation, wie den ersten und zweiten Teilungen T1, T2, der Abmessung der Ausstattung A in Umfangsrichtung, den Geschwindigkeiten der Übernahmeposition 6 und der Abgabeposition 8 und dgl.. Dies erfolgt von Seiten der Steuerung CU über eine entsprechende Programmierung oder ein wählbares Programm.

In der Ausführungsform in Fig. 2 weist die Transferstation T vier Festhalteeinheiten F auf, von denen jeweils zwei zwangsgekoppelt und mit einem gemeinsamen Antriebsmotor M1 bzw. M2 verbunden sind. Die in Umfangsrichtung gesehene Abmessung der jeweiligen Ausstattung A entspricht beispielsweise der der Ausstattungen A von Fig. 1, wie auch die erste Teilung T1, während die zweite Teilung T2 im Drehtisch D (die Behälter B könnten alternativ auch linear an der Transferstation T vorbeibewegt werden) wie auch die Durchmesser d2 der Behälter gegenüber Fig. 1 unterschiedlich sind. Diesen geänderten Arbeitsparametern wird von jedem Antriebsmotor M1, M2 innerhalb der Regelsektoren individuell Rechnung getragen.

Die beiden sich jeweils einen Antriebsmotor M1, M2 teilenden Festhalteeinheiten F sind an einem Winkelhebelarm mit hier beispielsweise etwa 90° Abwinkelung angeordnet, die im Bereich der Transferachse X in unterschiedlichen Höhenlagen platziert und drehgelagert sind. Jeder Winkelhebelarm weist einen Hebelarm 9a, 9b und einen zweiten Hebelarm 9a', 9b' auf, an dessen nach außen weisendem Armende das Andrückkissen 10 sowie die Ambossleiste 13 und der wenigstens eine Greiferfinger 12 montiert sind, und ist im Bereich ihrer Beuge beispielsweise direkt oder über eine nicht gezeigte Konsole, an der Transferachse X drehgelagert und mit dem Antriebsmotor M1, M2 in Antriebsverbindung.

Im Verfahrensablauf in Fig. 2 hat die obere Festhalteeinheit F des zwangsgekoppelten ersten Paars bereits eine Ausstattung A übernommen. Sie übt nurmehr eine reine Transferfunktion im Uhrzeigersinn aus, während die zweite Festhalteeinheit F des Paars gerade im Begriff ist, an der Übernahmeposition 6 eine beleimte Ausstattung A abzuheben. Von dem zweiten Paar zwangsgekoppelter Festhalteeinheiten F ist die in Fig. 2 rechte gerade im Begriff, die Ausstattung A an der Abgabeposition 8 zu applizieren (das Zusammentreffen der Positionen 8, 8' steht unmittelbar bevor), während die untere Festhalteeinheit F dieses Paars "leer" wieder in Richtung zum Zubringer Z bewegt wird. Spätestens kurz vor Erreichen der Abgabeposition 8 ist die in Fig. 2 obere Festhalteeinheit F des ersten Paars vorbereitend zur Abgabesituation im Regelsektor beschleunigt oder verzögert worden, wobei die damit zwangsgekoppelte Festhalteeinheit F dieses Paars bereits eine Ausstattung A vollständig und nur eine Transferfunktion übernommen hat. In etwa zu diesem Zeitpunkt hat die in Fig. 2 rechte Festhalteeinheit die Abgabe vollzogen, so dass die in Fig. 2 untere Festhalteeinheit F spätestens bei Erreichen der Übernahmeposition 6 des Greiferfingers 12 so beschleunigt oder verzögert wurde, dass das Andrückkissen 10 und der Greiferfinger 6 synchron mit der Geschwindigkeit der Leimpalette bewegt werden.

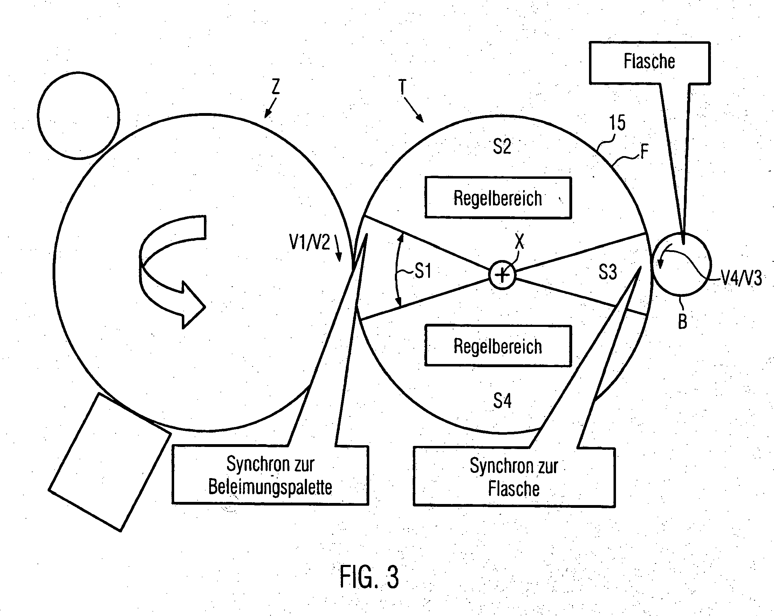

Ergänzend zu den Fig. 1 und 2 zeigt die Schemadarstellung in Fig. 3 die Unterteilung der Umlaufbahn 15 jeder Festhalteeinheit F in insgesamt vier Sektoren S1, S2, S3 und S4 bei einer vollen Umdrehung. Im Sektor S1 erfolgt ein Antrieb der Festhalteeinheit F um die Transferachse X synchron zur Bewegungsgeschwindigkeit der Oberfläche der Leimpalette (den überlagerten Geschwindigkeiten V1 und V2). Im in Umlaufrichtung folgenden Sektor S2, der ein Regelsektor ist, erfolgt eine Regelung der Bewegungsgeschwindigkeit der Festhalteeinheit F gegebenenfalls schon zur vorbereitenden Anpassung an die Geschwindigkeit der Abgabeposition resultierend aus den überlagerten Geschwindigkeiten V3 und V4, sowie der Ausstattungsabmessung und der zweiten Teilung T2. Im Sektor S3 bewegt sich die Festhalteeinheit F synchron mit der Abgabeposition 8 am Behälter B. Im letzten Sektor S4, der wiederum ein Regelsektor ist, erfolgt eine Anpassung an die erste Teilung T1 und die Geschwindigkeit der Übernahmeposition 6, d.h. an die Übernahmesituation, die dann im Sektor S1 präzise gesteuert wird. Insgesamt wird also bei dem Verfahren jede Festhalteeinheit periodisch innerhalb einer vollen Umdrehung um die Transferachse X nach einem ungleichförmigen Geschwindigkeitsprofil angetrieben.

Fig. 4 verdeutlicht eine Ausführungsform der Transferstation T, beispielsweise bestückt mit zwei Festhalteeinheiten F (ähnlich Fig. 1). Gestrichelt ist als Option wenigstens eine weitere Festhalteeinheit F' angedeutet, die höher liegt als die gezeigte Festhalteeinheit F, und beispielsweise zum gleichzeitigen Transferieren und Applizieren einer weiteren Ausstattung mittels desselben Antriebsmotors M1, M2 dienen kann. Da aufgrund der Antriebsmotoren M1 bis M4 in der Transferstation T keine Antriebsverbindung mit dem Zubringer Z oder dem Drehtisch D benötigt wird, könnte durchaus eine weitere gleichartig konzipierte Transferstation T für eine andere Aussattungssorte daneben platziert werden.

In Fig. 4 sind die beiden Antriebsmotoren M1, M2 für die Hebelarme 9a, 9b beispielsweise elektrische Torque-Motoren, die stationär unter einer Abdeckung 22 auf einem Unterbau 23 und koaxial zur Transferachse X ineinandergeschachtelt sind. Der Hebelarm 9b ist beispielsweise an einem stationären zentralen, vorzugsweise hohlen, Lagerrohr 20 drehgelagert, während der Hebelarm 9a über ein großdurchmessriges Wälzlager 17 in einem mit dem Unterbau 23 verbundenen Ringkörper 16 gelagert ist. Jeder Torque-Motor besitzt einen stationären, eine Wicklung 18 enthaltenden Stator in Ringform, während der ringförmige Rotor entweder mit dem jeweiligen Hebelarm 9a, 9b verbunden oder von diesem konstituiert wird und in Umfangsrichtung verteilte Magneten 19 trägt. Die Festhalteeinheit F ist in Fig. 4 mit einer Konsole 50 auf dem Hebelarm 9a montiert.

Die die Festhalteeinheit F tragende Konsole 50 kann bei einer Detailvariante (Fig. 4) über einen beispielsweise elektrischen oder pneumatischen Linearantrieb 32 in Richtung eines Doppelpfeils 33 beispielsweise in etwa radial zur Transferachse X zusätzlich verstellt werden, und somit einen zusätzlichen Bewegungsfreiheitsgrad, z.B. radial und linear, bereitstellen (Option). Alternativ könnte die Festhalteeinheit F auch um eine Schwenkachse am Hebelarm 9a oder der Konsole 50 verstellbar sein, die in etwa parallel zur Transferachse X positioniert ist, wobei für diese Schwenkbewegung ebenfalls ein Antrieb (nicht gezeigt), beispielsweise am Hebelarm 9a oder 9b der Konsole 50, angeordnet sein könnte. Die Leistungsversorgung oder Sensorsignale der jeweiligen Festhalteeinheit F könnte im Übrigen durch den hohlen Kernbereich der Transferachse X mittels Kabel bewerkstelligt werden, beispielsweise auch die des Betätigungsantriebs 14 des Greiferfingers 12.

Durch die Ineinanderschachtelung der Antriebsmotoren M1, M2 (Torque-Motoren) wird eine geringe Bauhöhe und werden kompakte Abmessungen erzielt. Die Hebelarme 9a, 9b sind so gestaltet und angeschlossen, dass sie um die Transferachse X relativ zueinander über bestimmte Winkelbereiche bewegbar sind, ohne gegenseitig zu kollidieren.

Die in den Fig. 5, 6 und 7 gezeigte Ausführungsform der Transferstation T mit vier Antriebsmotoren M1 bis M4 enthält zwar wie die Transferstation T in Fig. 2 vier Festhalteeinheiten F, jedoch ist jede Festhalteeinheit F an einem eigenen Hebelarm 9a, 9b, 21a, 21 b angeordnet, und mit einem eigenen Antriebsmotor gekoppelt und somit individuell und relativ zu allen anderen Festhalteeinheiten F um die Transferachse X antreibbar. Es könnte die Transferstation T natürlich auch nur drei oder mehr als vier Festhalteeinheiten F und Antriebsmotoren aufweisen.

In Fig. 5 ist für den Hebelarm 21a einer Festhalteeinheit F (nicht gezeigt) eine beispielsweise bezüglich der Transferachse X gegenüberliegende Unwucht-Ausgleichsmasse 26 vorgesehen, um selbst bei relativ hohen Geschwindigkeitsänderungen oder Umlaufgeschwindigkeiten einen sauberen schwingungsarmen Rundlauf zu gewährleisten. Solche Unwucht-Ausgleichsmassen 26 können allen vorgesehenen Festhalteeinheiten F zugeordnet sein.

Fig. 6 zeigt in einem Achsschnitt der Transferstation T beispielsweise deren Zuordnung zum Zubringer Z bzw. dessen Leimpalette 3. Die vier Antriebsmotoren M1 bis M4 sind auch hier koaxiale Torque-Motoren, die jeweils paarweise ineinandergeschachtelt und paarweise übereinandergestapelt sind, um Bauhöhe und Bauraum zu sparen. Die Hebelarme 9a, 9b, 21a, 21 b befinden sich zumindest im Zentralbereich auf unterschiedlichen Höhenlagen, um gegenseitige Kollisionen zu vermeiden. Vom Drehtisch D ist ein Drehteller 7 mit einem Servoantrieb 25 gezeigt, auf dem der mit der Ausstattung A zu versehene Behälter an der Transferstation T vorbeibewegt und dabei rotiert wird.

Fig. 7 zeigt eine Detailvariante zu den Fig. 5 und 6. Es sind vier zur Transferachse X koaxiale Antriebsmotoren M1 bis M4 (hier Torque-Motoren) übereinandergestapelt. Die Hebelarme 9a, 9b, 21a, 21b, deren jeder zumindest eine Festhalteeinheit F trägt (nicht gezeigt), sind mit ineinandergesetzten Hohlwellen 30 verbunden, die aneinander drehgelagert sind, und an einem Tragkörper 24, an welchem auch der Zubringer Z montiert sein kann.

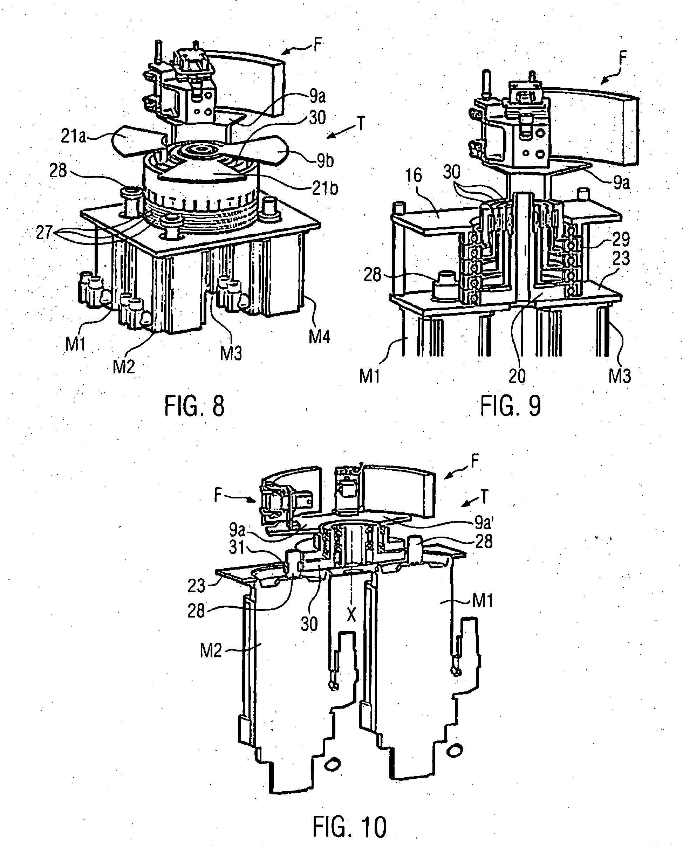

Fig. 8 zeigt eine Ausführungsform einer Transferstation T mit vier Festhalteeinheiten F an vier Hebelarmen 9a, 9b, 21a, 21b, jeweils angetrieben von einem eigenen Antriebsmotor M1 bis M4, im vorliegenden Fall von elektrischen Servomotoren (positions- und/oder drehmomentund/oder geschwindigkeits- und/oder drehzahlregelbaren Servomotoren), die an dem stationären Unterbau 23 unterseitig montiert sind, und mit Antriebsritzeln 28 mit unterschiedlichen Zahnkränzen 27 kämmen, deren jeder einem Hebelarm zugeordnet ist. Die Bewegungsübertragung erfolgt von den Zahnkränzen 27 über ineinandergesteckte und ineinander drehgelagerte Hohlwellen zu den Hebelarmen 9a, 9b, 21a, 21b, die in unterschiedlichen Höhenlagen angeordnet sein können, und so gestaltet sind, dass sie relativ zueinander ausreichende Bewegungsspiele in Umfangsrichtung haben, um bei individuellen unterschiedlichen Antriebsgeschwindigkeiten nicht miteinander zu kollidieren.

Fig. 9 verdeutlicht ein anderes Antriebskonzept, wiederum mit elektrischen Servomotoren als Antriebsmotoren M1 bis M4, ähnlich Fig. 8 (nur die Antriebsmotoren M1 und M3 und eine Festhalteeinheit F auf dem Hebelarm 9a sind gezeigt). Die Antriebsritzel 28 stehen über den stationären Unterbau 23 vor, an welchem die Antriebsmotoren M1 bis M4 unterseitig montiert sind. Oberseitig ist ferner analog zu Fig. 4 an dem stationären Unterbau 23 eine stationäre Platte 16 abgestützt, die auch der Drehlagerung der Hebelarme dient, die an ineinandergesteckten Hohlwellen 30 angebracht sind, die ihrerseits beispielsweise über Wälzlager 29 aneinander und an einem zentralen Lagerrohr 20 sowie in der Platte 16 drehgelagert sind.

Die in Fig. 10 hälftig gezeigte Transferstation T (Detailvariante) entspricht prinzipiell der in Fig. 2 gezeigten, weil auf jedem Hebelarm 9a, 9a' zwei in Umlaufrichtung aufeinanderfolgende Festhalteeinheiten F angeordnet sind, die somit zwängsverbunden sind und sich einen gemeinsamen Antriebsmotor M1 bzw. M2 (hier Servomotoren) teilen. Die Antriebsmotoren M1, M2 sind seitlich versetzt neben der Transferachse X an der Unterseite des stationären Unterbaus 23 montiert und greifen mit ihren Antriebsritzeln 28 über Verzahnungen 31 an Zahnkränzen der Hohlwellen 30 an, mit denen die Hebelarme 9a, 9a' (auch 9b, 9b', wie in Fig. 2, in Fig. 10 nicht gezeigt) verbunden sind und auf denen die Festhalteeinheiten F montiert sind.

Die in Fig. 10 gezeigte Transferstation T ist, wie erwähnt, mit vier Festhalteeinheiten F in einer Ebene ausgestattet, die sich jeweils paarweise einen gemeinsamen Antriebsmotor M1 bzw. M2 teilen. Es wäre durchaus möglich, mehr als vier Festhalteeinheiten F in der Transferstation T unterzubringen, zweckmäßig eine gerade Anzahl, die sich jeweils paarweise einen gemeinsamen Antriebsmotor teilen und paarweise individuell relativ zu anderen Paaren angetrieben werden.

Ferner ist es möglich, die jeweilige Transferstation T ohne Austausch von Hauptkomponenten modular zu erweitern oder zu reduzieren, z.B. durch Hinzunahme oder Wegnahme von Festhalteeinheiten und/oder Antriebsmotoren.

Da bei dem in der jeweiligen Transferstation T durchgeführten Verfahren jede gerade eine Übernahme- oder Abgabefunktion ausführende Festhalteeinheit F individuell aber synchron mit dem Zubringer Z bzw. dem Behälter B mittels eines in der Transferstation T enthaltenen Antriebsmotors angetrieben wird, und Regelsektoren S2, S4 jeder vollen Umdrehung einer Festhalteeinheit, die gerade nur eine Transferfunktion ausführt oder leer ist, zum individuellen Verändern der Geschwindigkeit relativ zu anderen Festhalteeinheiten genutzt werden, lassen sich mit einem Typ einer Transferstation unterschiedliche Abmessungen von Ausstattungen in Umfangsrichtung universell verarbeiten und können unterschiedliche Behälterdurchmesser und zumindest Drehtisch-Teilungen problemlos bewältigt werden, ohne die Transferstation austauschen oder in ihr manuell manipulieren zu müssen, beispielsweise nur über die entsprechende Programmierung der Steuerung CU und Regelung der Antriebsmotoren M1 bis M4. Ferner lässt sich die Transferstation T in dieser Auslegung modular mit unterschiedlichen Zubringern Z und/oder mit unterschiedlichen Drehtischen D oder auch linearen Behälterfördervorrichtungen bzw. deren Teilungen kombinieren, da die bislang übliche, starre Geometrie der Festhalteeinheiten drehangetriebener Ausstattungs-Transfer- bzw. Greiferzylinder aufgegeben wurde und durch ein hochflexibles, servogesteuertes, modular aufgebautes System einer erfindungsgemäßen Transferstation T ersetzt ist

## Patentansprüche

1. Vorrichtung zum Transferieren von Behälter-Ausstattungen (A) wie Etiketten, Stanniol zuschnitte, flächige oder reliefartige Applikationen oder Logos und dgl., mit zumindest zwei um eine Transferachse (X) einer Transferstation (T) in Umfangsrichtung versetzten, jeweils taktweise betätigbaren Festhalteeinheiten (F), die durch eine über einen Antrieb erzeugte Bewegung um die Transferachse (X) die Ausstattungen (A) einzeln von einer sich bewegenden Übernahmeposition (6) aus einem Zubringer (Z) übernehmen und durch die Transferstation (T) zu einer in Umfangsrichtung der Transferstation versetzten, sich bewegenden Abgabeposition (8) transferieren, **dadurch gekennzeichnet, dass** zumindest zwei der Festhalteeinheiten (F) um die Transferachse (X) relativ zueinander bewegbar angeordnet sind, und dass für die relativ zueinander bewegbaren Festhalteeinrichtungen (F) in der Transferstation (T) Antriebsmotoren (M1 bis M4) vorgesehen sind, mit denen in Umfangsrichtung innerhalb einer Umdrehung individuell periodisch ungleichförmige Bewegungen der Festhalteeinheiten (F) erzeugbar sind.

2. Vorrichtung nach Anspruch 1, **dadurch gekennzeichnet, dass** jede volle Umdrehung einer Festhalteeinheit (F) in mehrere, aufeinanderfolgende Antriebsmotor-Steuerbereiche unterteilt ist, nämlich einen zur Bewegung der Zubringer-Übernahmeposition (6), vorzugsweise an einer Leimpalette (3), synchronisierten Übernahmesektor (S1), einen nachfolgenden, zumindest auf eine zweite Teilung (T2) zwischen Übernahmepositionen (8) und/oder die Abmessung der Ausstattungen (A) in Umfangsrichtung und/oder Behälterdimensionen (d1, d2) individuell abgestimmten ersten Regelsektor (S2) mit individuellen Beschleunigungen oder Verzögerungen einen nachfolgenden, mit einer Umlauf- oder Vorbeibewegung der Abgabeposition (8) synchronisierten Abgabesektor (S3), und einen abschließenden, auf eine erste Teilung (T1) zwischen Abgabepositionen (6) und/oder die Abmessung der Ausstattung (A) in Umfangsrichtung individuell abgestimmten, zweiten Regelsektor (S4) mit individueller Beschleunigung oder Verzögerung, jeweils der Antriebsbewegung zumindest einer Festhalteeinheit (F).

3. Vorrichtung nach Anspruch 1, **dadurch gekennzeichnet, dass** zwei oder mehr als zwei Festhalteeinheiten (F) vorgesehen sind, und dass für jede Festhalteeinheit (F) ein eigener Antriebsmotor (M 1 bis M4) vorgesehen ist.

4. Vorrichtung nach Anspruch 1, **dadurch gekennzeichnet, dass** mehr als zwei Festhalteeinheiten (F) in der Transferstation (T) vorgesehen sind, und dass für jeweils mindestens zwei Festhalteeinheiten (F) ein gemeinsamer Antriebsmotor (M1, M2) vorgesehen ist.

5. Vorrichtung nach Anspruch 1, **dadurch gekennzeichnet, dass** der Antriebsmotor (M1 bis M4) ein elektrischer Servomotor ist, der entweder in einen Direktantrieb der Festhalteeinheit(en) (F) eingegliedert oder über ein Getriebe (28, 30) wenigstens eine Festhalteeinheit (F) relativ zu jeder weiteren individuell antreibt.

6. Vorrichtung nach Anspruch 5, **dadurch gekennzeichnet, dass** der elektrische Servomotor ein Torque-Motor mit stationärem, eine Wicklung enthaltenden Stator (18) und einem mit der wenigstens einen Festhalteeinheit (F) gekoppelten Ringläufer mit Magneten (19) umfasst, und dass die mehreren Servomotoren koaxial mit der Transferachse (X) übereinandergestapelt und/oder ineinandergeschachtelt sind.

7. Vorrichtung nach wenigstens einem der vorhergehenden Ansprüche, **dadurch gekennzeichnet, dass** jede Festhalteeinheit (F) oder zwei in Umfangsrichtung aufeinanderfolgende Festhalteeinheiten (F) an einem Hebelarm (9a, 9b, 9a', 9b', 21a, 21b) angeordnet ist bzw. sind, der einen vorbestimmten Radialabstand zur Transferachse (X) überbrückt und an einer mit der Transferachse (X) koaxialen Welle (30) angeordnet und mit dieser um die Transferachse (X) drehgelagert ist.

8. Vorrichtung nach wenigstens einem der Ansprüche 5, 6, **dadurch gekennzeichnet, dass** die Servomotoren (M1 bis M4) seitlich versetzt zur Transferachse (X) angeordnet und jeweils über ein Zahnradgetriebe mit dem jeweiligen Hebelarm verbunden sind.

9. Vorrichtung nach Anspruch 1, **dadurch gekennzeichnet, dass** jede Festhalteeinheit (F) als zumindest eine Baugruppe eine Ambossleiste (13), wenigstens ein Andrückkissen (10), und entlang der Ambossleiste (13) wenigstens einen Greiferfinger (12) umfasst, der bei Betätigung der Festhalteeinheit (F) relativ zur Ambossleiste (13) zwischen Greif- und Freigabepositionen umstellbar ist.

10. Vorrichtung nach Anspruch 9, **dadurch gekennzeichnet, dass** jede Festhalteeinheit (F) in Richtung der Transferachse (X) übereinanderliegend zwei oder mehr Baugruppen zum gleichzeitigen Transferieren von Ausstattungen (A) umfasst.

11. Vorrichtung nach Anspruch 9, **dadurch gekennzeichnet, dass** jede Festhalteeinheit (F) zur Greiferfingerbetätigung zusätzlich einen eigenen Betätigungsantrieb (14), einen Betätigungsmagneten oder einen Piezoantrieb, umfasst, der direkt oder indirekt am Hebelarm (9a, 9b, 9a', 9b', 21 a, 21 b) abgestützt ist.

12. Vorrichtung nach Anspruch 9, **dadurch gekennzeichnet, dass** die Baugruppe der Festhalteeinheit (F) am Hebelarm (9a, 9b, 9a', 9b', 21a, 21b) einen zusätzlichen Bewegungsfreiheitsgrad und einen Antriebsmotor (32) zur Verstellung der Baugruppe relativ zum Hebelarm in Richtung (33) des zusätzlichen Bewegungsfreiheitsgrades aufweist.

13. Vorrichtung nach Anspruch 4, **dadurch gekennzeichnet, dass** der die zwei Festhalteeinheiten (F) der insgesamt mehr als zwei Festhalteeinheiten (F) der Transferstation (T) mit dem jeweiligen gemeinsamen Antriebsmotor (M1 bis M4) verbindende Hebelarm (9a, 9a', 9b, 9b') als Winkelhebelarm ausgebildet ist, der an den beiden von der Transferachse (X) nach außen weisenden Armenden jeweils eine Festhalteeinheit (F) trägt, und im Bereich der Beuge um die Transferachse (X) drehgelagert und mit dem Antriebsmotor (M1 bis M4) gekoppelt ist.

14. Vorrichtung nach Anspruch 13, **dadurch gekennzeichnet, dass** der Winkelhebelarm in etwa mit 90° abgewinkelt ist.

15. Vorrichtung nach wenigstens einem der vorhergehenden Ansprüche, **dadurch gekennzeichnet, dass** die Hebelarme (9a, 9b, 9a', 9b', 21a, 21 b) der mehreren Festhalteeinheiten (F) zumindest in innenliegenden Teilbereichen in Richtung der Transferachse (X) in unterschiedlicₕeₙ Ebenen angeordnet sind.

16. Vorrichtung nach wenigstens einem der vorhergehenden Ansprüche, **dadurch gekennzeichnet, dass** für jede Festhalteeinheit (F) oder für zwei an einem Winkelhebeiarm angeordnete Festhalteeinheiten (F) zumindest eine gegenüberliegende Unwucht-Ausgleichsmasse (26) vorgesehen ist.

17. Vorrichtung nach wenigstens einem der vorhergehenden Ansprüche, **dadurch gekennzeichnet, dass** die Transferstation (T) durch Hinzunahme oder Wegnahme wenigstens einer Festhalteeinheit (F) modular modifizierbar ausgebildet ist.

18. Vorrichtung nach Anspruch 1, **dadurch gekennzeichnet, dass** jede mit einem Antriebsmotor (M1 bis M4) verbundene Festhalteeinheit (F) oder mit einem gemeinsamen Antriebsmotor (M1, M2) verbundene Festhalteeinheit (F) eines Paares um die Transferachse (X) drehgelagert ist bzw. sind.

19. Vorrichtung nach wenigstens einem der vorhergehenden Ansprüche, **dadurch gekennzeichnet, dass** die Antriebsmotoren (M) an eine elektronische Steuerung (CU) angeschlossen sind, die zur austauschfreien Anpassung der Transferstation (T) an zumindest unterschiedliche Abmessungen von Ausstattungen (A) in Umfangsrichtung und/oder erste und zweite Teilungen (T1, T2) und/oder unterschiedliche Behälterdurchmesser (d1, d2), programmierbar ist und/oder entsprechende Programme vorhält.

20. Verfahren zum aufeinanderfolgenden Transferieren einzelner Ausstattungen (A), wie Etiketten, Stannid zuschnitte, flächige oder reliefartige Applikationen oder Logos und dgl., mit in Umfangsrichtung untereinander gleichen Abmessungen mit einer Vorrichtung nach einem der Ansprüche 1-19, mit mindestens zwei um eine Transferachse (X) einer Transferstation (T) umlaufend angetriebenen, in Umfangsrichtung zueinander versetzten Festhalteeinheiten (F) von einem Zubringer (Z) mit mehreren, mit einer ersten Teilung (T1) umlaufenden Übergabepositionen (6) zu mit einer zweiten Teilung (T2) relativ zur Transferstation (T) umlaufenden oder daran vorbeilaufenden Abgabepositionen (8), jede Festhalteeinheit (F) beim Transferieren innerhalb einer vollen Umdrehung um die Transferachse (X) in der Transferstation (T) und relativ zu einer anderen periodisch mit einem individuellen, ungleichförmigen Geschwindigkeitsprofil angetrieben wird.

21. Verfahren nach Anspruch 20, **dadurch gekennzeichnet, dass** jede Festhalteeinheit (F) in einem auf die jeweilige Übernahmeposition (6) ausgerichteten Übernahmesektor (S) einer vollen Umdrehung seiner Umlaufbahn in Ausrichtung auf die erste Teilung (T1) und synchron mit der Bewegung der Übernahmeposition (6) angetrieben wird, in einem nachfolgenden ersten Regelsektor (S2) in individueller Abstimmung zumindest auf die zweite Teilung (T2) und/oder die Abmessung der Ausstattung (A) und/oder die Behälterdimension (d1, d2) beschleunigt oder verzögert wird, in einem nachfolgenden Abgabesektor (S3) in Ausrichtung auf die zweite Teilung (T2) und synchron mit der Bewegung der Abgabeposition (8) angetrieben wird, und in einem zweiten abschließenden Regelsektor (S4) in individueller Abstimmung zumindest auf die erste Teilung (T1) und/oder die Abmessung der Ausstattung (A) in Umfangsrichtung beschleunigt oder verzögert wird.

## Claims

1. Device for the transfer of container-decorations (A), like labels, tin foil-blanks, planar or relief-like applications or logos and the like, comprising at least two respectively cyclically actuable holding units (F) offset in circumferential direction about a transfer axis (X) of a transfer station (T), which holding units (F) take the decorations (A) from supplier (Z) one-by-one during a movement about the transfer axis produced by a drive from a moving taking position (6) and transfer the decorations through the transfer station (T) to a moving transfer position (8) offset to the taking portion (6) in circumferential direction of the transfer station (T), **characterized in that** at least two of the holding units (F) are arranged for a relative movement with respect to another about the transfer axis (X), and that drive motors (M1 to M4) are provided in the transfer station (T) for the holding units (F) which are moveable relative to one another, by means of which drive motors (M1 to M4) within one revolution individual periodic irregular circumferential movements of the holding units (F) can be generated.

2. Device according to claim 1, **characterized in that** each full revolution of a holding unit (F) is subdivided in several consecutive drive motor control regions, namely into one taking sector (S1) synchronized with the movement of the supplier-taking position (6), preferably situated at a glue pallet (3), into one consecutive first regulating sector (S2) including individual accelerations or decelerations, the regulating sector (S2) being individually matched to a second pitch (T2) between taking positions (8) and/or to the dimensions of the decorations (A) in circumferential direction and/or to container dimensions (d1, d2), into one consecutive transfer sector (S3) synchronized with a circulating movement or passing movement of the transfer position (8), and one final second regulating sector (S4) including an individual acceleration or deceleration, respectively of the driving motion of at least one holding unit (F), the second regulating sector (S4) being individually matched to a first pitch (T1) between transfer positions (6) and/or to the dimensions of the decoration (A) in circumferential direction.

3. Device according to claim 1, **characterized in that** two or more than two holding units (F) are provided, and that an individual drive motor (M1 to M4) is provided for each holding unit (F).

4. Device according to claim 1, **characterized in that** more than two holding units (F) are provided in the transfer station (T), and that a common drive motor (M1, M2) is provided for respectively at least two holding units (F).

5. Device according to claim 1, **characterized in that** the drive motor (M1 to M4) is an electric servomotor, which either is incorporated into a direct drive of the holding unit or holding units (F) or is driving at least one holding unit (F) individually relative to each further via a gear mechanism (28, 30).

6. Device according to claim 5, **characterized in that** the electric servomotor is a torque-motor having a stationary stator (18) containing an electric coil and a ring runner equipped with magnets (19) and coupled with the at least one holding unit (F), and that the several servomotors are stacked above each other and/or are nested within each other coaxially to the transfer axis (X).

7. Device according to at least one of the preceding claims, **characterized in that** each holding unit (F) or two holding units (F) following each other circumferential direction are arranged at a lever arm (9a, 9b, 9a', 9b', 21 a, 21 b), which lever arm bridges a predetermined radial distance from the transfer axis (X) and is arranged at a shaft (30) which is coaxial with the transfer axis (X), and that the lever arm is rotatably supported by the shaft (30) for rotation about the transfer axis (X).

8. Device according to at least one of claims 5, 6, **characterized in that** the servomotors (M1 to M4) are arranged with a sideward offset in relation to the transfer axis (X) and are connected respectively via a gear mechanism with the respective lever arm.

9. Device according to claim 1, **characterized in that** each holding unit (F) comprises as at least one component group, an anvil bar (13), at least one pressing cushion (1), and along the anvil bar (13) at least one gripper finger (12), which gripper finger is adjustable during an actuation of the holding unit (F) in relation to the anvil bar (13) between gripping positions and release positions.

10. Device according to claim 9, **characterized in that** for the simultaneous transfer of decorations (A) each holding unit (F) comprises two or more component groups which are situated above each other in the direction of the transfer axis (X).

11. Device according to claim 9, **characterized in that** each holding unit (F) has an additional individual actuating drive (14) for actuating the gripper finger, namely an actuating magnet or a piezo-drive, which respectively is supported directly or indirectly at the lever arm (9a, 9b, 9a', 9b', 21 a, 21 b).

12. Device according to claim 9, **characterized in that** the component group of the holding unit (F) has an additional degree of freedom for movements at the lever arm (9a, 9b, 9a', 9b', 21 a, 21 b) and comprises a drive motor (32) for adjusting the component group in relation to the lever arm in a direction (33) of the additional degree of freedom of movements.

13. Device according to claim 4, **characterized in that** the lever arm (9a, 9a', 9b, 9b') coupling the two holding units (F) of the totally more than two holding units (F) of the transfer station (T) to the respective common drive motor (M1 to M4) is formed as an angle lever arm carrying the respective holding units (F) at both arm ends extending from the transfer axis (X) to the outer side, and that the angle lever arm is rotatably supported in the region of the bend between the arms for rotation about the transfer axis (X) and is coupled there with the drive motor (M1 to M4).

14. Device according to claim 13, **characterized in that** the angle lever arm is cranked by about 90°.

15. Device according to at least one of the preceding claims, **characterized in that** the lever arms (9a, 9b, 9a', 9b', 21 a, 21b) of the several holding units (F), at least in inner partial regions, are arranged in different planes in the direction of the transfer axis (X).

16. Device according to at least one of the preceding claims, **characterized in that** at least one imbalance compensation mass (26) is provided opposite to each holding unit (F) or for two holding units (F) arranged at an angle lever arm.

17. Device according to at least one of the preceding claims, **characterized in that** the transfer station (T) can be modified in modular fashion by adding or removing at least one holding unit (F).

18. Device according to claim 1, **characterized in that** each holding unit (F) coupled with a drive motor (M1 to M4) or each holding unit (F) of a pair coupled with a common drive motor (M1, M2) is rotatably supported for rotation about the transfer axis (X).

19. Device according to at least one of the preceding claims, **characterized in that** the drive motors (F) are connected with an electronic control (CU) which either is programmable and/or holds corresponding programs ready for adapting the transfer station (T) without replacements to at least different circumferential dimensions of decorations (A) and/or to different first and second pitches (T1, T2) and/or to different container diameters (d1, d2).

20. Method for consecutively transferring decorations (A) one-by-one, like labels, tin foil-blanks, planar or relief-like applications or logos and the like, having equal dimensions among each other in circumferential direction, by use of a device according to one of claims 1 to 19, comprising at least two holding units (F) which are offset in circumferential direction with respect to another and are rotatingly driven about a transfer axis (X) of a transfer station (T), from a supplier (Z) including several taking positions (6) circulating with a first pitch (T1) in between to transfer positions (8) circulating or passing relative to the transfer station (T) with a second pitch (T2) in between, wherein while transferring each holding unit (F) is driven periodically with an individual irregular speed profile within a full revolution about the transfer axis (X) in the transfer station (T) and relative to another holding unit (F).

21. Method according to claim 20, **characterized in that** each holding unit (F) is driven within a taking sector (S) of a full revolution of its orbit and aligned with a respective taking position (6) in alignment to the first pitch (T1) and synchronously with the movement of the taking position (6), is then accelerated or decelerated in a consecutive first regulating sector (S2) with individual adaptation at least to the second pitch (T2) and/or the dimension of the decoration (A) and/or the dimension (d1, d2) of the containers, is driven in a consecutive transfer sector (S3) in alignment to the second pitch (T2) and synchronously with the movement of the transfer position (8), and is accelerated or decelerated in a second final regulating sector (S4) in individual adaptation at least to the first pitch (T1) and/or to the dimension of the decoration (A) in circumferential direction.

## Revendications

1. Dispositif pour transférer des accessoires ou décorations de contenant ou récipient (A), tels que des étiquettes, des flans découpés de film d'aluminium, des applications planes ou en relief, ou des logos et éléments similaires, comprenant au moins deux unités de maintien (F), qui peuvent être actionnées de manière cyclique et sont décalées dans la direction périphérique autour d'un axe de transfert (X) d'un poste de transfert (T), et qui, par un mouvement autour de l'axe de transfert (X) produit par l'intermédiaire d'un entraînement, prélèvent les accessoires (A) individuellement à partir d'un alimentateur (Z), d'une position de prélèvement (6) en mouvement, et les transfèrent, au travers du poste de transfert (T), à une position de délivrance (8) en mouvement, décalée dans la direction périphérique du poste de transfert, **caractérisé en ce qu'**au moins deux des unités de maintien (F) sont agencées de manière mobile l'une par rapport à l'autre autour de l'axe de transfert (X), et **en ce que** dans le poste de transfert (T) sont prévus, pour les unités de maintien (F) mobiles les unes par rapport aux autres, des moteurs d'entraînement (M1 à M4) avec lesquels il est possible de produire individuellement et périodiquement, dans la direction périphérique, à l'intérieur d'un tour de rotation, des mouvements non uniformes des unités de maintien (F).

2. Dispositif selon la revendication 1, **caractérisé en ce que** chaque tour de rotation complet d'une unité de maintien (F) est subdivisé en plusieurs plages successives de commande de moteur d'entraînement, à savoir un secteur de prélèvement (S1) synchronisé avec le mouvement de la position de reprise (6) de l'alimentateur, de préférence au niveau d'une plaque d'encollage (3), un premier secteur de régulation suivant (S2) adapté individuellement au moins à un deuxième pas de division (T2) entre des positions de prélèvement (8) et/ou à la dimension des accessoires (A) dans la direction périphérique et/ou aux dimensions (d1, d2) du contenant, avec des accélérations ou décélérations individuelles, un secteur de délivrance suivant (S3) synchronisé avec un mouvement périphérique ou de balayage de la position de délivrance (8), et un deuxième secteur de régulation (S4) final adapté individuellement à un premier pas de division (T1) entre des positions de délivrance (8) et/ou à la dimension de l'accessoire (A) dans la direction périphérique, avec une accélération ou une décélération individuelle, respectivement du mouvement d'entraînement d'au moins une unité de maintien (F).

3. Dispositif selon la revendication 1, **caractérisé en ce que** sont prévues deux ou plus de deux unités de maintien (F), et **en ce que** pour chaque unité de maintien (F) est prévu son propre moteur d'entraînement (M1 à M4).

4. Dispositif selon la revendication 1, **caractérisé en ce que** dans le poste de transfert (T) sont prévues plus de deux unités de maintien (F), et **en ce que** pour respectivement au moins deux unités de maintien (F), il est prévu un moteur d'entraînement commun (M1, M2).

5. Dispositif selon la revendication 1, **caractérisé en ce que** le moteur d'entraînement (M1 à M4) est un servomoteur électrique, qui soit est intégré à un entraînement direct de ou des unité(s) de maintien (F), ou entraîne au moins une unité de maintien (F) par rapport à chacune des autres par l'intermédiaire d'une transmission (28, 30).

6. Dispositif selon la revendication 5, **caractérisé en ce que** le servomoteur électrique est un moteur-couple avec un stator (18) stationnaire renfermant un enroulement, et un rotor annulaire avec aimants (19) couplé à ladite au moins une unité de maintien (F), et **en ce que** les plusieurs servomoteurs sont empilés les uns au-dessus des autres et/ou emboités les uns dans les autres de manière coaxiale à l'axe de transfert (X).

7. Dispositif selon l'une au moins des revendications précédentes, **caractérisé en ce que** chaque unité de maintien (F) ou deux unités de maintien (F) se succédant en direction périphérique, est ou respectivement sont agencées sur un bras de levier (9a, 9b, 9a', 9b', 21a, 21b), qui couvre une distance d'espacement radiale prédéterminée à l'axe de transfert (X), et qui est agencé sur un arbre (30) coaxial à l'axe de transfert (X) et monté en rotation avec celui-ci autour de l'axe de transfert (X).

8. Dispositif selon l'une au moins des revendications 5, 6, **caractérisé en ce que** les servomoteurs (M1 à M4) sont agencés de manière latéralement décalée par rapport à l'axe de transfert (X), et sont reliés chacun respectivement par une transmission à roues dentées, au bras de levier respectif.

9. Dispositif selon la revendication 1, **caractérisé en ce que** chaque unité de maintien (F) comprend en tant qu'au moins un sous-groupe, une barre d'enclume (13), au moins un coussin presseur (10) et le long de la barre d'enclume (13) au moins un doigt de préhenseur (12), qui, lors de l'actionnement de l'unité de maintien (F) relativement à la barre d'enclume (13) peut être commuté entre des positions de préhension et de dégagement.

10. Dispositif selon la revendication 9, **caractérisé en ce que** chaque unité de maintien (F) comporte deux modules de construction ou davantage, superposés dans la direction de l'axe de transfert (X), pour transférer simultanément des accessoires (A).

11. Dispositif selon la revendication 9, **caractérisé en ce que** chaque unité de maintien (F) comprend, pour l'actionnement des doigts de préhenseur, en plus son propre entraînement d'actionnement (14), un aimant d'actionnement ou un entraînement piézoélectrique, qui prend appui directement ou indirectement sur le bras de levier (9a, 9b, 9a', 9b', 21a, 21b).

12. Dispositif selon la revendication 9, **caractérisé en ce que** le sous-groupe de l'unité de maintien (F) présente sur le bras de levier (9a, 9b, 9a', 9b', 21a, 21b), un degré de liberté de mouvement supplémentaire et un moteur d'entraînement (32) pour déplacer le sous-groupe par rapport au bras de levier dans la direction (33) du degré de liberté de mouvement supplémentaire.

13. Dispositif selon la revendication 4, **caractérisé en ce que** le bras de levier (9a, 9a', 9b, 9b') reliant les deux unités de maintien (F) desdites plus de deux unités de maintien (F) au total du poste de transfert (T) au moteur d'entraînement commun respectif (M1 à M4), est réalisé en tant que bras de levier coudé, qui, aux deux extrémités de bras dirigées vers l'extérieur à partir de l'axe de transfert (X), porte respectivement une unité de maintien (F), et, dans la zone du coude, est monté en rotation autour de l'axe de transfert (X) et couplé au moteur d'entraînement (M1 à M4).

14. Dispositif selon la revendication 13, **caractérisé en ce que** le bras de levier coudé est coudé environ d'un angle de 90°.

15. Dispositif selon l'une au moins des revendications précédentes, **caractérisé en ce que** les bras de levier (9a, 9b, 9a', 9b', 21a, 21b) desdites plusieurs unités de maintien (F) sont agencés, au moins dans des zones partielles situées à l'intérieur, dans des plans différents dans la direction de l'axe de transfert (X).

16. Dispositif selon l'une au moins des revendications précédentes, **caractérisé en ce que** pour chaque unité de maintien (F) ou pour deux unités de maintien (F) agencées sur un bras de levier coudé, il est prévu au moins une masse de compensation de balourd (26) opposée.

17. Dispositif selon l'une au moins des revendications précédentes, **caractérisé en ce que** le poste de transfert (T) est d'une configuration permettant sa modification modulaire par l'ajout ou le retrait d'au moins une unité de maintien (F).

18. Dispositif selon la revendication 1, **caractérisé en ce que** chaque unité de maintien (F) reliée à un moteur d'entraînement (M1 à M4) ou unité de maintien (F) d'une paire, reliée à un moteur d'entraînement commun (M1, M2), est ou sont montées en rotation autour de l'axe de transfert (X).

19. Dispositif selon l'une au moins des revendications précédentes, **caractérisé en ce que** les moteurs d'entraînement (M) sont raccordés à une commande électronique (CU) qui peut être programmée et/ou dispose de programmes appropriés, en vue d'une adaptation, sans reconversion ou remplacement du poste de transfert (T), à au moins des dimensions différentes des accessoires (A) dans la direction périphérique et/ou à des premiers et deuxièmes pas de division (T1, T2) et/ou à des diamètres de contenant (d1, d2) différents.

20. Procédé pour transférer successivement des accessoires ou décorations (A) individuels, tels que des étiquettes, des flans découpés de film d'aluminium, des applications planes ou en relief, ou des logos et éléments similaires, avec des dimensions identiques entre-elles dans la direction périphérique, à l'aide d'un dispositif selon l'une des revendications 1 - 19 comprenant au moins deux unités de maintien (F) entraînées en révolution autour d'un axe de transfert (X) d'un poste de transfert (T) et décalées mutuellement dans la direction périphérique, à partir d'un alimentateur (Z) comportant plusieurs positions de prélèvement (6) en révolution avec un premier pas de division (T1), vers des positions de délivrance (8) en révolution avec un deuxième pas de division (T2) par rapport au poste de transfert (T) ou passant au-devant celui-ci, le procédé étant tel que lors du transfert, chaque unité de maintien (F) soit entraînée, sur un tour complet autour de l'axe de transfert (X) dans le poste de transfert (T), et périodiquement par rapport à une autre avec un profil de vitesse individuel non uniforme.

21. Procédé selon la revendication 20, **caractérisé en ce que** chaque unité de maintien (F) est entraînée, dans un secteur de prélèvement (S) d'un tour de rotation complet de sa trajectoire de révolution, orienté vers la position de prélèvement (6), de manière adaptée au premier pas de division (T1) et synchronisée avec le mouvement de la position de prélèvement (6), puis est accélérée ou ralentie dans un premier secteur de régulation suivant (S2), de manière individuellement adaptée au moins à un deuxième pas de division (T2) et/ou à la dimension de l'accessoire (A) et/ou à la dimension du contenant (d1, d2), puis est entraînée dans un secteur de délivrance suivant (S3), de manière adaptée au deuxième pas de division (T2) et synchronisée avec le mouvement de la position de délivrance (8), et est ensuite accélérée ou ralentie dans un deuxième secteur de régulation (S4) final, de manière individuellement adaptée au moins au premier pas de division (T1) et/ou à la dimension de l'accessoire (A) dans la direction périphérique.
